# EUROPEAN PATENT SPECIFICATION

(11) **EP 3 858 577 B1**
(45) Date of publication and mention of the grant of the patent: **17.08.2022**
(21) Application number: 21153936.6
(22) Date of filing: 28.01.2021
(51) Int. Cl.: B29C 45/76

(54) **INJECTION MOLDING MACHINE**
SPRITZGIESSMASCHINE
MACHINE DE MOULAGE À INJECTION

(30) Priority: 31.01.2020 JP 2020015481
(43) Date of publication of application: 04.08.2021
(73) Proprietor: Sumitomo Heavy Industries, Ltd., Tokyo 141-6025 (JP)
(72) Inventor: YOSHIOKA, Yutaro, Chiba-shi, Chiba, 263-0001 (JP); TANIDA, Kazuki, Chiba-shi, Chiba, 263-0001 (JP)
(74) Representative: Louis Pöhlau Lohrentz

(56) References cited:
- EP-A1- 3 006 183
- US-A1- 2004 186 607
- US-A1- 2006 247 821

## Description

### BACKGROUND OF THE INVENTION

### Field of the Invention

The present invention relates to an injection molding machine.

### Description of Related Art

In the related art, an injection molding machine includes an operation unit which receives an input operation by a user and a display unit which displays a display screen.

Japanese Unexamined Patent Publication No. 2014-156096 discloses a communication network system of an inj ection molding machine which displays a screen including a previous page display button through which a display is changed to a display of a previous page and a subsequent page display button through which a display is changed to a display of a subsequent page on a display unit of an injection molding machine or a management computer.

Moreover, US 2006/247821 A1 discloses the display of several condition setting screens corresponding to various operation conditions of an injection molding machine so as to set various operation conditions.

US 2004/186607 A1 discloses an industrial machine which inter alia inputs a change in an operating condition, stores history data indicative of the change in the operating condition, and displays the history data.

EP 3 006183 A1 discloses a control device for an injection molding machine that synchronously scrolls a first display image and a second display image.

### SUMMARY OF THE INVENTION

Meanwhile, when molding conditions of the injection molding machine are set, an operator changes set values of a plurality of basic process screens in a recommended order. In this case, if a screen other than the basic process screen is opened during the setting, it is necessary to remember which basic process screen has been set.

Therefore, an object of the present invention is to provide an injection molding machine which improves operability of setting work.

The aforementioned objective is achieved by an injection molding machine according to claim 1.

According to an aspect of the present invention, there is provided an injection molding machine including: an operation unit which receives an operation; a display section which displays a display screen belonging to either a first display screen group or a second display screen group; a display screen control unit which switches the display screen of the display section based on the operation of the operation unit; and a storage unit which stores history information of the display screen displayed on the display section, in which when the operation unit is operated, the display screen control unit displays the display screen belonging to the first display screen group based on the history information stored in the storage unit.

According to the present invention, it is possible to provide an injection molding machine which improves the operability of the setting work.

### BRIEF DESCRIPTION OF THE DRAWINGS

Fig. 1 is a view showing a state when mold opening of an injection molding machine according an embodiment is completed.
Fig. 2 is a view showing a state when a mold of the inj ection molding machine according to the embodiment is clamped.
Fig. 3 is a functional block diagram of a controller.
Fig. 4 is a schematic diagram showing a category of a display screen.
Fig. 5 is an example of a display screen displayed on a display unit.
Fig. 6 is a flowchart showing an example of processing of the controller when any one of screen transition buttons is operated in a first operation example.
Fig. 7 is a flowchart showing an example of processing of the controller when a previous process button is operated in the first operation example.
Fig. 8 is a diagram showing a history of a display screen and switching of the display screens when the previous process button is operated in the first operation example.
Fig. 9 is a flowchart showing an example of processing of the controller when any one of the screen transition buttons is operated in a second operation example.
Fig. 10 is a flowchart showing an example of processing of the controller when the previous process button is operated in the second operation example.
Fig. 11 is a flowchart showing an example of processing of the controller when the previous process button is operated in a third operation example.
Fig. 12 is a diagram showing a history of a display screen and switching of the display screens when the previous process button is operated in the third operation example.
Fig. 13s a flowchart showing an example of processing of the controller when the previous process button is operated in a fourth operation example.
Fig. 14 is a diagram showing a history of a display screen and switching of the display screens when the previous process button is operated in the fourth operation example.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

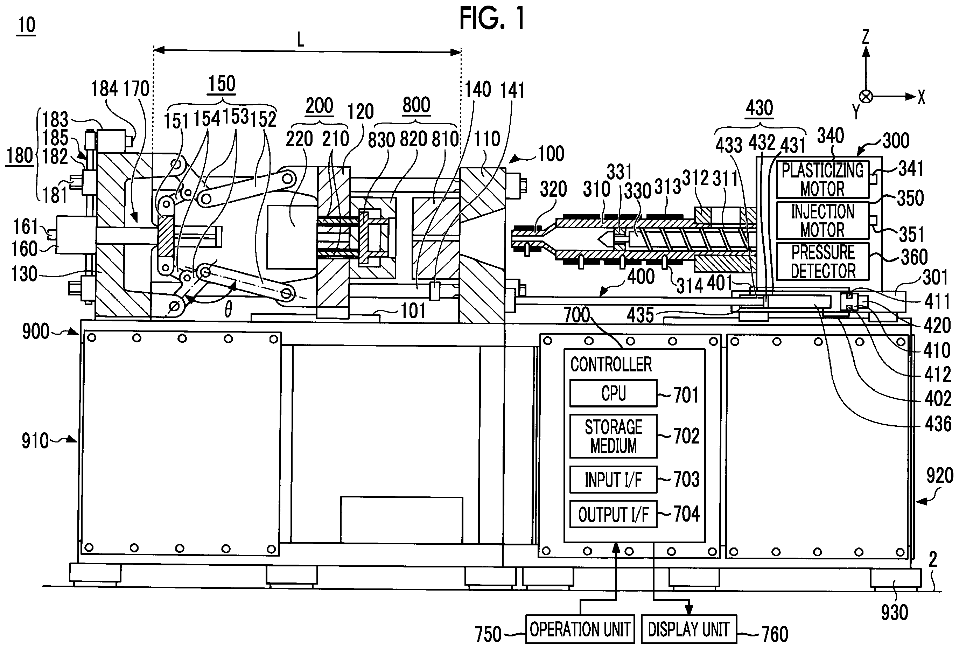

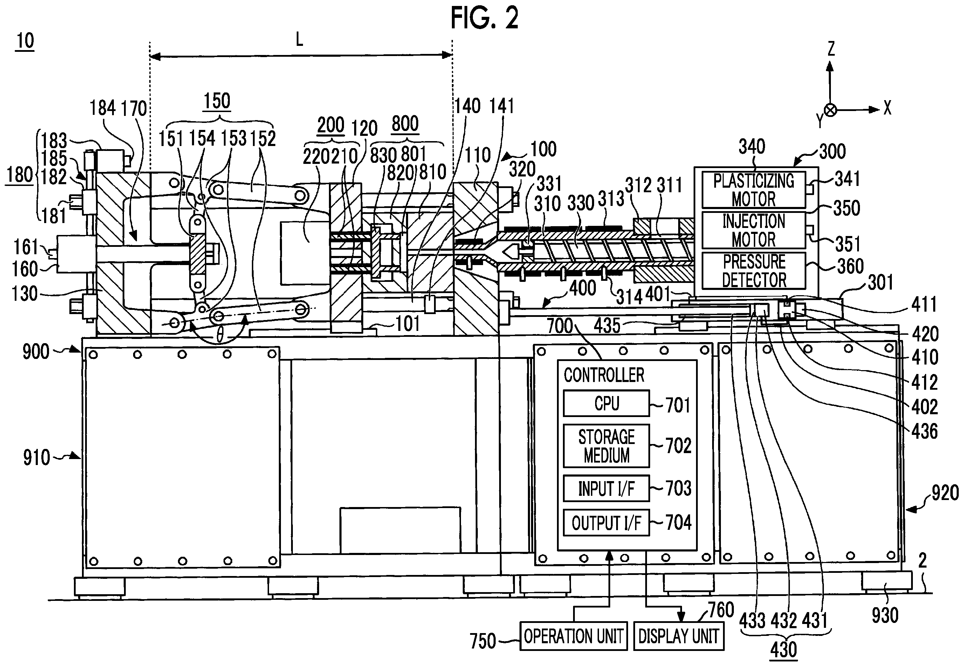

Fig. 1 is a view showing a state when mold opening of an injection molding machine according an embodiment is completed. Fig. 2 is a view showing a state when a mold of the injection molding machine according to the embodiment is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 1. A negative side in the Y-axis direction is referred to as an operation side, and a positive side in the Y-axis direction is referred to as a counter operation side.

As shown in Figs. 1 to 2, the injection molding machine 1 includes the mold clamping unit 100 which openings or closes a mold unit 800, an ejector unit 200 which ejects a molding product molded by the mold unit 800, an injection unit 300 which injects a molding material into the mold unit 800, a moving unit 400 which moves the injection unit 300 forward or rearward with respect to the mold unit 800, a controller 700 which controls each component of the injection molding machine 1, and a frame 900 which supports each component of the injection molding machine 1. The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 1 will be described.

### (Mold Clamping Unit)

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is open is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110 to which the stationary mold 810 is attached, a movable platen 120 to which the movable mold 820 is attached, a toggle support 130 which is disposed with a gap from the stationary platen 110, a tie bar 140 which connects the stationary platen 110 and the toggle support 130 to each other, a toggle mechanism 150 which moves the movable platen 120 with respect to the toggle support 130 in the mold opening and closing directions, a mold clamping motor 160 which operates the toggle mechanism 150, a motion conversion mechanism 170 which converts a rotary motion of the mold clamping motor 160 into a linear motion, and a mold space adjustment mechanism 180 which adjusts a gap between the stationary platen 110 and the toggle support 130.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

The toggle support 130 is disposed with a gap from the stationary platen 110, and is placed on the mold clamping unit frame 910 to be movable in mold opening and closing directions. In addition, the toggle support 130 may be movably disposed along a guide which is placed on the mold clamping unit frame 910. The guide of the toggle support 130 may be also used as the guide 101 of the movable platen 120.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other with a gap L therebetween in the mold opening and closing directions by the tie bar 140. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 has a mold space adjustment mechanism 180. The mold space adjustment mechanism 180 performs the mold space adjustment by adjusting the gap L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a central portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit 200 is attached to the movable platen 120 and moves forward or rearward together with the movable platen 120. The ejector unit 200 includes an ejector rod 210 which ejects the molding product from the mold unit 800, and a drive mechanism 220 which moves the ejector rod 210 in a movement direction (X-axis direction) of the movable platen 120.

The ejector rod 210 is disposed to be movable forward or rearward through a through-hole of the movable platen 120. A front end portion of the ejector rod 210 comes into contact with a movable member 830 which is disposed to be movable forward or rearward inside the movable mold 820. The front end portion of the ejector rod 210 may be connected to the movable member 830 or may not be connected to the movable member 830.

For example, the drive mechanism 220 includes an ejector motor and a motion conversion mechanism that converts a rotary motion of the ejector motor into a linear motion of the ejector rod 210. The motion conversion mechanism includes a screw shaft and a screw nut which is screwed to the screw shaft. A ball or a roller may be interposed between the screw shaft and the screw nut.

The ejector unit 200 performs an ejection process under the control of the controller 700. In the ejection process, the ejector rod 210 is moved forward from a standby position to an ejection position at a set movement speed, and thus, the movable member 830 moves forward and the molding product is ejected. Thereafter, the ejector motor is driven to move the ejector rod 210 rearward at a set movement speed, and thus, the movable member 830 moves rearward to an original standby position.

For example, a position or movement speed of the ejector rod 210 is detected using an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 touches the mold unit 800, and the cavity space 801 inside the mold unit 800 is filled with the molding material by the injection unit 300. For example, the injection unit 300 has a cylinder 310 which heats the molding material, a nozzle 320 which is provided on a front end portion of the cylinder 310, a screw 330 which is disposed to be rotatable and movable forward or rearward in the cylinder 310, a plasticizing motor 340 which rotates the screw 330, an injection motor 350 which moves the screw 330 forward or rearward, and a pressure detector 360 which detects a force transmitted between the injection motor 350 and the screw 330.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and presses the mold unit 800. The heating unit 313 and the temperature measurer 314 are provided on an outer periphery of the nozzle 320. The controller 700 controls the heating unit 313 such that a measured temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front side of the screw 330 and is accumulated in the front portion of the cylinder 310, and thus, the screw 330 moves rearward. Thereafter, when the screw 330 moves forward, the liquid molding material accumulated in the front side of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front side of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X-axis negative direction) of the screw 330 during filling is referred to as a front side, and the movement direction (X-axis positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the mold closing process. Moreover, the ejection process may be started during the mold opening process. In a case where an on/off valve which opens or closes the flow path of the nozzle 320 is provided, the mold opening process may be started during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 which receives input operations by a user and a display unit 760 which displays a screen. For example, the operation unit 750 and the display unit 760 may include a touch panel to be integrated with each other. The touch panel as the display unit 760 displays the screen under the control of the controller 700. For example, information such as setting of the injection molding machine 1 and a current state of the injection molding machine 1 may be displayed on the screen of the touch panel. Further, for example, an input operation unit such as a button which receives an input operation by the user or an input field may be displayed on the screen of the touch panel. The touch panel as the operation unit 750 detects the input operation on the screen by the user and outputs a signal corresponding to the input operation to the controller 700. As a result, for example, the user operates the input operation unit provided on the screen while checking the information displayed on the screen, and thus, can set the injection molding machine 1 (including inputting the set value) or the like. Further, the user operates the input operation unit provided on the screen, and thus, can operate the injection molding machine 1 corresponding to the input operation unit. Moreover, for example, the operation of the injection molding machine 1 may be an operation (including stopping) of the mold clamping unit 100, the ejector unit 200, the injection unit 300, the moving unit 400, or the like. Further, the operation of the injection molding machine 1 may be switching of the screen displayed on the touch panel as the display unit 760.

In addition, although the operation unit 750 and the display unit 760 of the present embodiment are described as being integrated as a touch panel, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

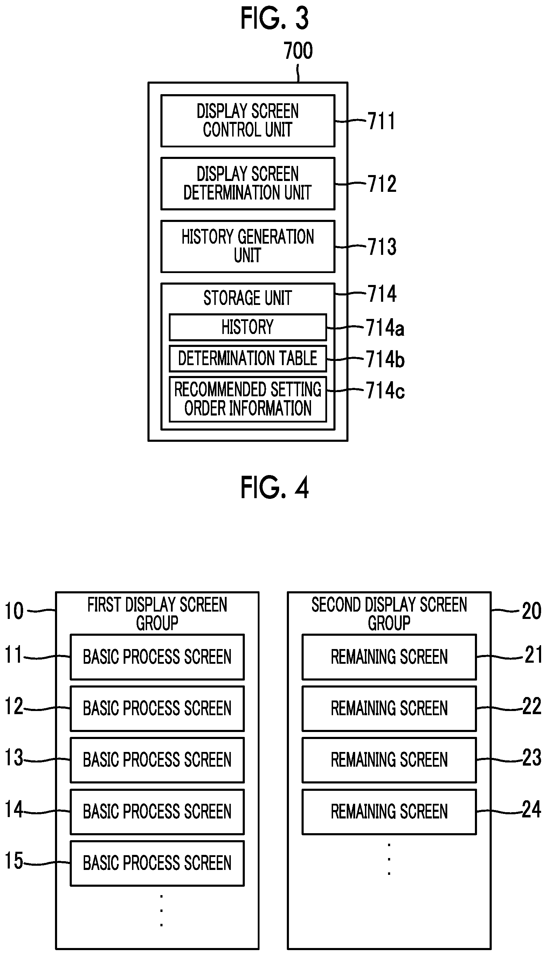

Next, the controller 700 which switches the display screen displayed on the display unit 760 by operating the operation unit 750 will be further described with reference to Fig. 3. Fig. 3 is a functional block diagram of the controller 700.

The controller 700 includes a display screen control unit 711 which switches the display screen, a display screen determination unit 712 which determines which display screen group the display screen to be determined belongs to, a history generation unit 713 which generates a history of the display screen, and a storage unit 714 which stores the history.

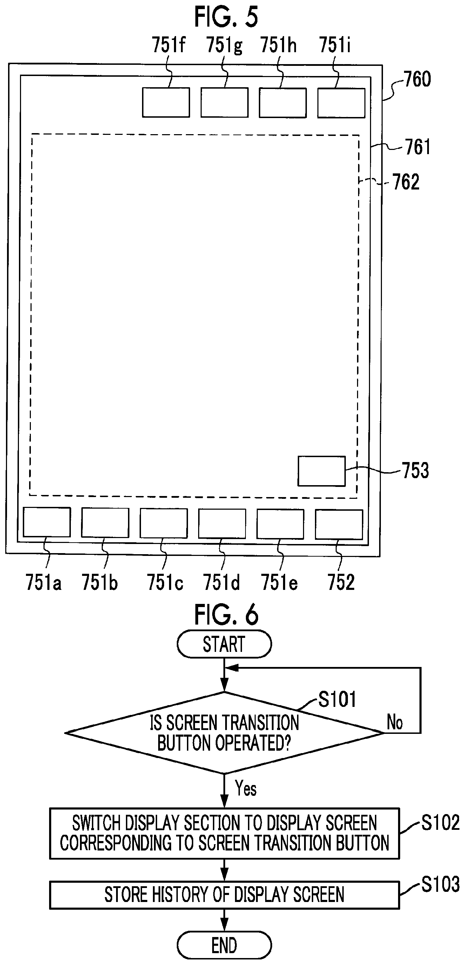

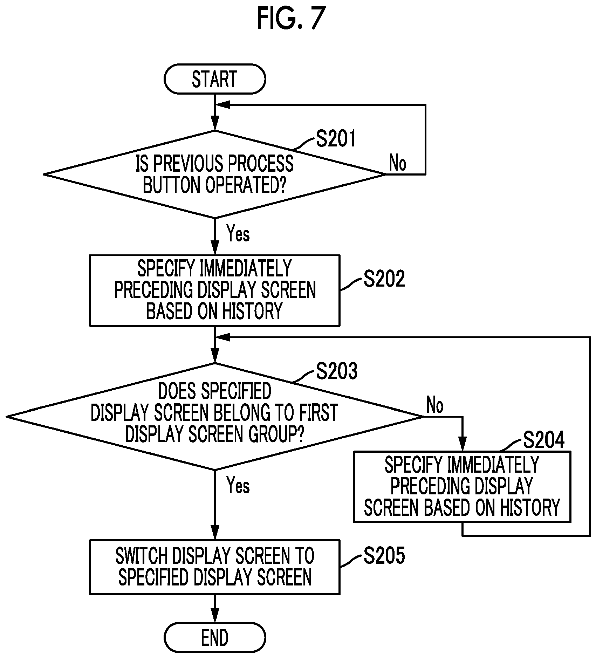

The display screen control unit 711 switches the display screen to be displayed on the touch panel as the display unit 760 based on the operation (touch, tap, etc.) of the touch panel as the operation unit 750 by the user. For example, a screen transition button or a previous process button as the operation unit 750 is displayed on the screen of the touch panel. When the screen transition button is operated, the display screen control unit 711 displays the display screen corresponding to the button on the display section (refer to Fig. 5 described later) 762 of the touch panel as the display unit 760. Moreover, when the previous process button is operated, the display screen control unit 711 determines the display screen to be displayed based on processing (Fig. 7 or the like) described later, and displays the determined display screen on the display section 762 (refer to Fig. 5 described later) of the touch panel as the display unit 760.

The display screen determination unit 712 determines whether the display screen to be determined is a display screen belonging to a first display screen group or a display screen belonging to a second display screen group. Fig. 4 is a schematic diagram showing a category of the display screen. Here, the display screen belonging to the first display screen group means a display screen (hereinafter, referred to as a "basic process screen") which sets molding conditions of the injection molding machine 1. The display screen belonging to the second display screen group is a display screen other than the display screen belonging to the first display screen group, and refers to remaining display screens (hereinafter, referred to as "remaining screens") other than the basic process screen. For example, the display screen (basic process screen) belonging to the first display screen group includes a mold attachment screen, a temperature screen, an operation screen during purging, a full/semi-automatic plasticizing/filling/holding pressure screen, and a logging screen. For example, the display screen (remaining screen) belonging to the second display screen group includes a monitoring setting screen, a system setting screen, a language setting screen, and a maintenance screen.

In the following description, as shown in Fig. 4, basic process screens 11 to 15 are included as the display screens belonging to a first display screen group 10, and the remaining screens 21 to 24 are included as the display screens belonging to a second display screen group 20. Further, the basic process screen 11 is the mold attachment screen, the basic process screen 12 is the temperature screen, the basic process screen 13 is the operation screen during purging, the basic process screen 14 is the full/semi-automatic plasticizing/filling/holding pressure screen, and the basic process screen 15 is the logging screen. Further, the remaining screen 21 is the monitoring setting screen, the remaining screen 22 is the system setting screen, the remaining screen 23 is the language setting screen, and the remaining screen 24 is the maintenance screen.

Here, the mold attachment screen (basic process screen 11) is a display screen for setting when the mold unit 800 is attached to the injection molding machine 1. The temperature screen (basic process screen 12) is a display screen for setting the temperature of the cylinder 310 of the injection molding machine 1. The operation screen during purging (basic process screen 13) is a display screen for setting a purging operation. The full/semi-automatic plasticizing/filling/holding pressure screen (basic process screen 14) is a display screen for setting the operation of the screw 330 of the injection molding machine 1. The logging screen (basic process screen 15) is a display screen for managing quality data of the molding product.

Moreover, the monitoring setting screen (remaining screen 21) is a display screen for monitoring and setting each operation of the injection molding machine 1. The system setting screen (remaining screen 22) is a display screen for setting input/output signals and communication of the injection molding machine 1. The language setting screen (remaining screen 23) is a display screen for setting a language displayed on the screen. The maintenance screen (remaining screen 24) is a display screen for setting maintenance of the injection molding machine 1.

Returning to Fig. 3, the history generation unit 713 generates the history of the display screen displayed on the display unit 760 (display section 762 described later), and records the generated history in the storage unit 714.

The history 714a generated by the history generation unit 713 is recorded in the storage unit 714.

Further, the storage unit 714 stores a determination table 714b indicating which display screen group (first display screen group or second display screen group) each display screen belongs to. Accordingly, the display screen determination unit 712 determines whether display screen to be determined is the display screen belonging to the first display screen group or the display screen belonging to the second display screen group, based on the determination table 714b.

Further, when setting the molding conditions of the injection molding machine 1 using the basic process screens 11 to 15, a recommended order is determined. This recommended order may be stored in the storage unit 714 as recommended setting order information 714c. In the following description, in the recommended setting order information 714c, the order of the basic process screen 11 (mold attachment screen), the basic process screen 12 (temperature screen), the basic process screen 13 (operation screen during purging), the basic process screen 14 (full/semi-automatic plasticizing/filling/holding pressure screen), and the basic process screen 15 (logging screen) is defined as the recommended order.

Next, an example of the screen displayed on the display unit 760 will be described with reference to Fig. 5. Fig. 5 is an example of the screen displayed on the display unit 760. Here, the operation unit 750 and the display unit 760 are constituted by a touch panel, and an operation button or the like as the operation unit 750 is disposed on the screen.

The display unit 760 has a display area 761 for displaying the screen. The display area 761 includes the display section 762. Setting items and the like are displayed on the display section 762 according to the display screens (basic process screens 11 to 15 and remaining screens 21 to 25). The user operates the button provided on the display section 762 or inputs a numerical value or the like into the input field, and thus, can input the molding condition of the injection molding machine 1. Further, the user displays various information on the display section 762, and thus, can check the setting or the like.

Further, the display area 761 includes screen transition buttons 751a to 751i. The screen transition buttons 751a to 751i are associated with contents displayed on the display section 762. When the user operates the screen transition button 751a, the display section 762 is switched to the basic process screen 11. When the user operates the screen transition button 751b, the display section 762 is switched to the basic process screen 12. When the user operates the screen transition button 751c, the display section 762 is switched to the basic process screen 13. When the user operates the screen transition button 751d, the display section 762 is switched to the basic process screen 14. When the user operates the screen transition button 751e, the display section 762 is switched to the basic process screen 15. When the user operates the screen transition button 751f, the display section 762 is switched to the remaining screen 21. When the user operates the screen transition button 751g, the display section 762 is switched to the remaining screen 22. When the user operates the screen transition button 751h, the display section 762 is switched to the remaining screen 23. When the user operates the screen transition button 751i, the display section 762 is switched to the remaining screen 24.

Although the display area 761 shown in Fig. 5 is described as having screen transition buttons 751a to 751i, the present invention is not limited to this. The display area 761 may include at least one or more screen transition buttons. Further, the screen transition buttons provided in the display area 761 may be different for each display screen (basic process screens 11 to 15 and remaining screens 21 to 25) displayed on the display section 762.

Further, the display area 761 includes a previous process button 752. When the user operates the previous process button 752, the display section 762 is switched to the display screen determined based on the processing (Fig. 7 or the like) described later.

Further, the display section 762 may include a setting confirmation button 753. The setting confirmation button 753 is a button for confirming a parameter selected/input by the display section 762. The confirmation of the parameter is not limited to this, and the parameter may be confirmed when the display screen displayed on the display section 762 is switched. Further, the parameter may be confirmed at the time of the input.

Next, processing of the controller 700 for switching the display screen to be displayed on the display section 762 of the display unit 760 based on the operation of the operation unit 750 by the user will be described with reference to Figs. 6 to 14.

### <First Operation Example>

Fig. 6 is a flowchart showing an example of processing of the controller 700 when any one of the screen transition buttons 751a to 751i is operated.

In Step S101, the display screen control unit 711 determines whether or not any one of the screen transition buttons 751a to 751i is operated. When any one of the screen transition buttons 751a to 751i is operated (Yes in S101), the processing of the controller 700 proceeds to Step S102. When the screen transition buttons 751a to 751i are not operated (No in S101), the processing of the controller 700 repeats Step S101.

In Step S102, the display screen control unit 711 switches the display section 762 to the display screen corresponding to the operated screen transition buttons (751a to 751i). For example, when the screen transition button 751a is operated, the display screen control unit 711 causes the display section 762 to display the basic process screen 11. For example, when the screen transition button 751f is operated, the display screen control unit 711 causes the display section 762 to display the remaining screen 21.

In Step S103, the history generation unit 713 records (additionally writes) the history of the display screen displayed on the display section 762 in the storage unit 714. Then, the processing of the controller 700 shown in Fig. 6 ends.

Fig. 7 is a flowchart showing an example of processing of the controller 700 when the previous process button 752 is operated.

In Step S201, the display screen control unit 711 determines whether or not the previous process button 752 is operated. When the previous process button 752 is operated (Yes in S201), the processing of the controller 700 proceeds to Step S202. When the previous process button 752 is not operated (No in S201), the processing of the controller 700 repeats Step S201.

In Step S202, the display screen control unit 711 specifies an immediately preceding display screen of the display screen currently displayed on the display section 762, based on the history 714a of the storage unit 714.

In Step S203, the display screen determination unit 712 determines whether or not the specified display screen belongs to the first display screen group 10. When the specified display screen belongs to the first display screen group 10 (Yes in S203), the processing of the controller 700 proceeds to Step S205. If the specified display screen does not belong to the first display screen group 10 (No in S203), the processing of the controller 700 proceeds to Step S204.

In Step S204, the display screen control unit 711 newly specifies an immediately preceding display screen of the specified display screen, based on the history 714a of the storage unit 714. Then, the processing of the controller 700 is returned to Step S203.

In Step S205, the display screen control unit 711 switches the display screen displayed on the display section 762 to the specified display screen. Then, the processing of the controller 700 shown in Fig. 7 ends.

If there is no the immediately preceding display screen in Step S201 or Step S204, the processing of the controller 700 may end without switching the display screen displayed on the display section 762.

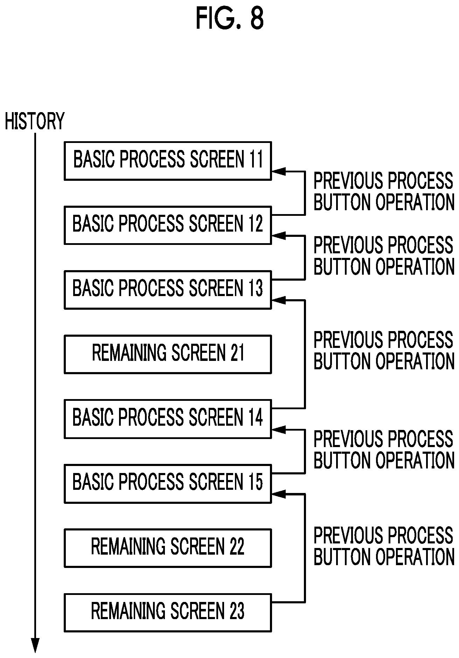

Fig. 8 is a diagram showing the history of the display screen and switching of the display screens when the previous process button 752 is operated.

Here, the user displays the display screens of the basic process screen 11, the basic process screen 12, the basic process screen 13, the remaining screen 21, the basic process screen 14, the basic process screen 15, the remaining screen 22, and the remaining screen 23 on the display section 762 in this order.

When the user operates the previous process button 752 in a state where the remaining screen 23 is displayed on the display section 762, the display screen control unit 711 causes the display section 762 to display the basic process screen 15. Further, when the user operates the previous process button 752 in a state where the basic process screen 15 is displayed on the display section 762, the display screen control unit 711 causes the display section 762 to display the basic process screen 14. Further, when the user operates the previous process button 752 in a state where the basic process screen 14 is displayed on the display section 762, the display screen control unit 711 causes the display section 762 to display the basic process screen 13. Further, when the user operates the previous process button 752 in a state where the basic process screen 13 is displayed on the display section 762, the display screen control unit 711 causes the display section 762 to display the basic process screen 12. Further, when the user operates the previous process button 752 in a state where the basic process screen 12 is displayed on the display section 762, the display screen control unit 711 causes the display section 762 to display the basic process screen 11. Even when the user operates the previous process button 752 in a state where the basic process screen 11 is displayed on the display section 762, the display screen control unit 711 causes the display section 762 to display the basic process screen 11.

As described above, according to the injection molding machine 1 according to the present embodiment, when the previous process button 752 is operated by the user, the display screen control unit 711 displays the latest basic process screen based on the history 714a. That is, when the display screen displayed on the display section 762 is the display screen (remaining screen) belonging to the second display screen group 20, the previous process button 752 is operated to display the last displayed basic process screen on the display section 762. Further, when the screen displayed on the display section 762 is the display screen (basic process screen) belonging to the first display screen group 10, the previous process button 752 is operated to display the immediately preceding displayed basic process screen on the display section 762.

For example, when the remaining screen is displayed while the basic process screen is set, the previous process button 752 is operated to be returned to the latest basic process screen. As a result, it is possible to quickly return to the basic process screen during setting, and it is possible to prevent human error such as forgetting to set.

That is, in the injection molding machine 1 according to the present embodiment, regardless of whether the display screen displayed on the display section 762 is the display screens (basic process screens 11 to 15) belonging to the first display screen group 10 or the display screens (remaining screens 21 to 24) belonging to the second display screen group 20, the display screen is stored in the storage unit 714 as the history 714a. Then, when the previous process button 752 is operated, whether the display screen belongs to the first display screen group 10 or the second display screen group 20 from behind the history 714a (in other words, in order from the last displayed display screen) is determined, and the display screen belonging to the first display screen group 10 is displayed.

### <Second Operation Example>

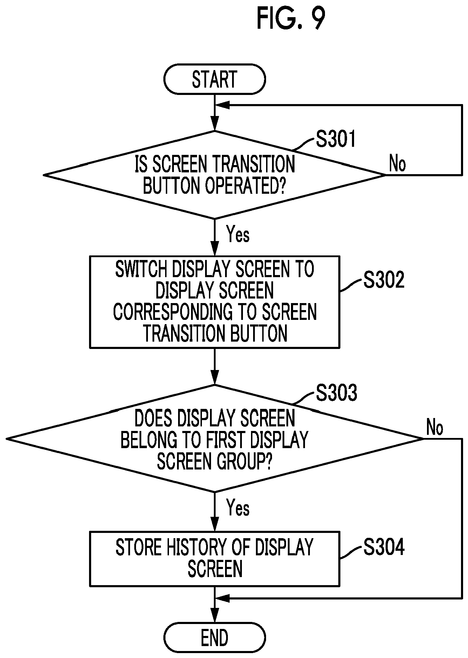

Fig. 9 is a flowchart showing an example of processing of the controller 700 when any one of the screen transition buttons 751a to 751i is operated.

In Step S301, the display screen control unit 711 determines whether or not any one of the screen transition buttons 751a to 751i is operated. When any one of the screen transition buttons 751a to 751i is operated (Yes in S301), the processing of the controller 700 proceeds to Step S302. When any one of the screen transition buttons 751a to 751i is not operated (No in S301), the processing of the controller 700 repeats Step S301.

In Step S302, the display screen control unit 711 switches the display screen displayed on the display section 762 to the display screen corresponding to the operated screen transition button.

In Step S303, the display screen determination unit 712 determines whether or not the display screen displayed on the display section 762 belongs to the first display screen group 10. When the display screen belongs to the first display screen group 10 (Yes in S303), the processing of the controller 700 proceeds to Step S304. When the display screen does not belong to the first display screen group 10 (No in S303), the processing of the controller 700 shown in Fig. 9 ends.

In Step S304, the history generation unit 713 records (additionally writes) the history of the display screen displayed on the display section 762 in the storage unit 714. Then, the processing of the controller 700 shown in Fig. 9 ends. That is, when the display screens (basic process screens 11 to 15) belonging to the first display screen group 10 are displayed on the display section 762, the history is recorded, and when the display screens (remaining screens 21 to 24) belonging to the second display screen group 20 are displayed on the display section 762, the history is not recorded.

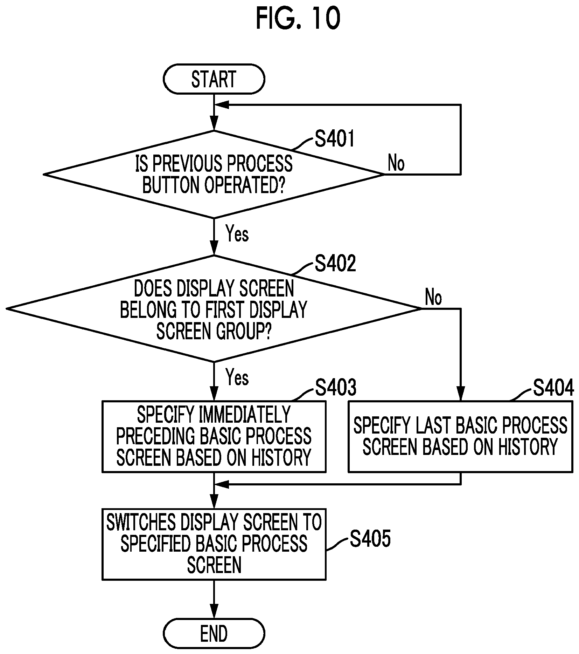

Fig. 10 is a flowchart showing an example of processing of the controller 700 when the previous process button 752 is operated.

In Step S401, the display screen control unit 711 determines whether or not the previous process button 752 is operated. When the previous process button 752 is operated (Yes in S401), the processing of the controller 700 proceeds to Step S402. When the previous process button 752 is not operated (No in S401), the processing of the controller 700 repeats Step S401.

In Step S402, the display screen determination unit 712 determines whether or not the display screen displayed on the display section 762 belongs to the first display screen group 10. When the display screen belongs to the first display screen group 10 (Yes in S402), the processing of the controller 700 proceeds to Step S403. If the display screen does not belong to the first display screen group 10 (No in S402), the processing of the controller 700 proceeds to Step S404.

In Step S403, the display screen control unit 711 specifies an immediately preceding basic process screen of the display screen (basic process screen) currently displayed on the display section 762, based on the history 714a of the storage unit 714. Then, the processing of the controller 700 proceeds to Step S 405.

In Step S404, the display screen control unit 711 specifies the last basic process screen based on the history 714a of the storage unit 714. Then, the processing of the controller 700 proceeds to Step S405.

In Step S405, the display screen control unit 711 switches the display screen displayed on the display section 762 to the specified basic process screen. Then, the processing of the controller 700 shown in Fig. 7 ends.

When there is no immediately preceding basic process screen in Step S403, or when there is no basic process screen in the history 714a in Step S404, the processing of the controller 700 may end without switching the display screen displayed on the display section 762.

As in the first operation example, in the second operation example as well, when the previous process button 752 is operated by the user, the display screen control unit 711 can display the latest basic process screen on the display section 762 based on the history 714a.

### <Third Operation Example>

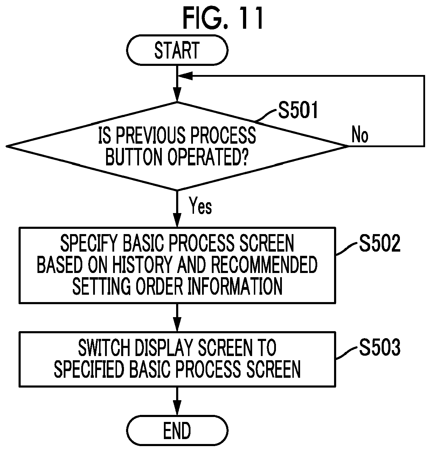

Fig. 11 is a flowchart showing an example of processing of the controller 700 when the previous process button 752 is operated.

In Step S501, the display screen control unit 711 determines whether or not the previous process button 752 is operated. When the previous process button 752 is operated (Yes in S501), the processing of the controller 700 proceeds to Step S502. When the previous process button 752 is not operated (No in S501), the processing of the controller 700 repeats Step S501.

In Step S502, the display screen control unit 711 specifies the last-order basic process screen based on the history 714a of the storage unit 714 and the recommended setting order information 714c. The recommended setting order information 714c is information which is arbitrarily set by the user in advance. The order of the display screens (basic process screens 11 to 15) specified by the user is stored in the recommended setting order information 714c.

In Step S503, the display screen control unit 711 switches the display screen displayed on the display section 762 to the specified basic process screen. Then, the processing of the controller 700 shown in Fig. 7 ends.

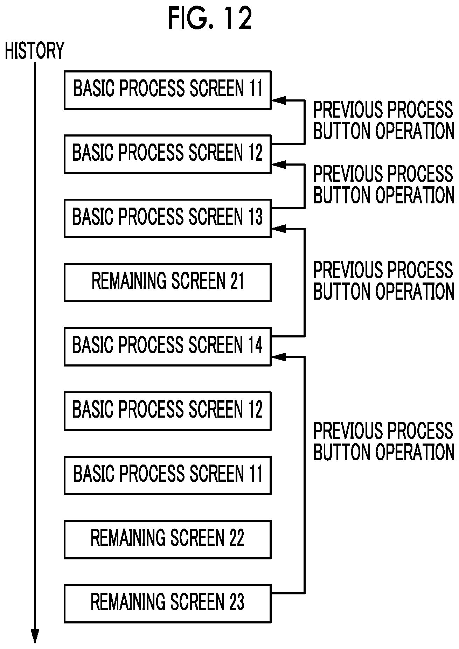

Fig. 12 is a diagram showing the history of the display screen and switching of the display screens when the previous process button 752 is operated.

Here, the user displays the display screens of the basic process screen 11, the basic process screen 12, the basic process screen 13, the remaining screen 21, the basic process screen 14, the basic process screen 12, the basic process screen 11, the remaining screen 22, and the remaining screen 23 on the display section 762 in this order.

Further, as the recommended setting order information 714c, the order of the basic process screen 11, the basic process screen 12, the basic process screen 13, the basic process screen 14, and the basic process screen 15 is defined as the recommended order.

As shown in comparison with the history 714a and the recommended setting order information 714c, it is determined that the basic process screens 11 to 14 of the recommended order have been displayed in the past. Therefore, when the user operates the previous process button 752 in a state where the remaining screen 23 is displayed on the display section 762, the display screen control unit 711 causes the display section 762 to display the basic process screen 14. Further, when the user operates the previous process button 752 in a state where the basic process screen 14 is displayed on the display section 762, the display screen control unit 711 causes the display section 762 to display the basic process screen 13. Further, when the user operates the previous process button 752 in a state where the basic process screen 13 is displayed on the display section 762, the display screen control unit 711 causes the display section 762 to display the basic process screen 12. Further, when the user operates the previous process button 752 in a state where the basic process screen 12 is displayed on the display section 762, the display screen control unit 711 causes the display section 762 to display the basic process screen 11. Even when the user operates the previous process button 752 in a state where the basic process screen 11 is displayed on the display section 762, the display screen control unit 711 causes the display section 762 to display the basic process screen 11.

According to the third operation example, the user operates the previous process button 752, and thus, among the basic process screens displayed on the display section 762, the basic process screen with the latest (last) recommended order when setting the molding conditions can be displayed. In other words, it is possible to display the last displayed basic process screen in the recommended order when setting the molding conditions. As a result, it is possible to easily return to the basic process screen during setting.

### <Fourth Operation Example>

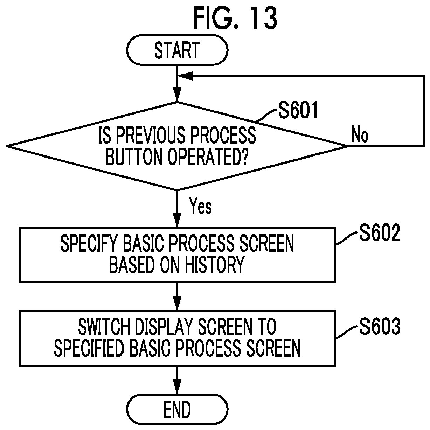

Fig. 13 is a flowchart showing an example of processing of the controller 700 when the previous process button 752 is operated.

In Step S601, the display screen control unit 711 determines whether or not the previous process button 752 is operated. When the previous process button 752 is operated (Yes in S601), the processing of the controller 700 proceeds to Step S602. When the previous process button 752 is not operated (No in S601), the processing of the controller 700 repeats Step S601.

In Step S602, the display screen control unit 711 specifies the basic process screen to be displayed based on the history 714a of the storage unit 714. Here, the history 714a includes a history of transitions of the display screen and setting confirmation information indicating whether the setting confirmation button 753 is operated on the basic process screen in the history. That is, the history 714a stores the history of transitions of the display screen in chronological order. In addition, the setting confirmation information indicating whether or not the setting on the display screen is confirmed is stored in the display screen in the history. For example, in the display screen being displayed, when the setting confirmation button 753 is operated after changing the set value, the setting confirmation information indicating that the setting is confirmed corresponding to the history of the display screen is stored. Meanwhile, in the display screen being displayed, when the screen transition buttons 751a to 751i are operated without operating the setting confirmation button 753, the setting confirmation information indicating that the setting is not confirmed is stored in the history of the display screen. The display screen control unit 711 specifies the next basic process screen of the basic process screen of which the setting is confirmed based on the history 714a.

In Step S603, the display screen control unit 711 switches the display screen displayed on the display section 762 to the specified basic process screen. Then, the processing of the controller 700 shown in Fig. 7 ends.

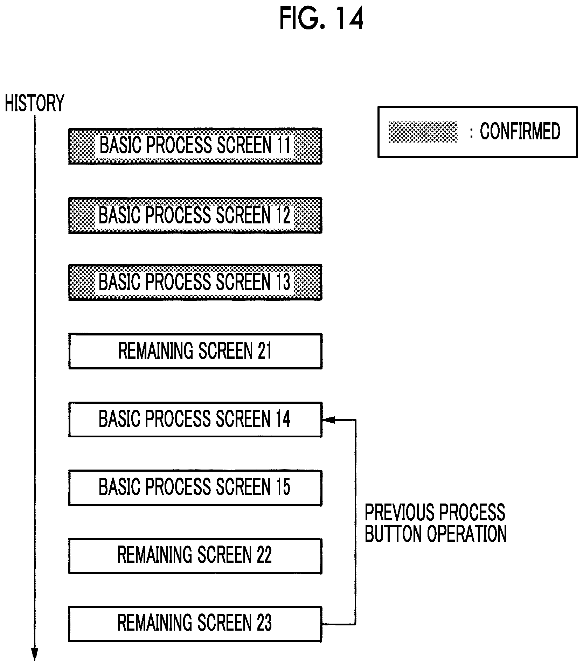

Fig. 14 is a diagram showing the history of the display screen and switching of the display screens when the previous process button 752 is operated.

Here, the user displays the display screens of the basic process screen 11, the basic process screen 12, the basic process screen 13, the remaining screen 21, the basic process screen 14, the basic process screen 15, the remaining screen 22, and the remaining screen 23 on the display section 762 in this order. Further, the setting confirmation button 753 is operated on the basic process screen 11, the basic process screen 12, and the basic process screen 13. This confirmation information is stored in the history 714a together with the transition of the display screen. In addition, in Fig. 14, the setting confirmation is shown by shading.

In the example shown in Fig. 14, when the basic process screen 14 and the basic process screen 15 are displayed, the user does not operate the setting confirmation button 753. Therefore, when the user operates the previous process button 752 in a state where the remaining screen 23 is displayed on the display section 762, first, the display screen control unit 711 specifies the basic process screen 13 in which the latest setting is confirmed based on the history 714a. Next, the display screen control unit 711 specifies the next basic process screen 14 of the basic process screen 13 of which the setting is confirmed. The basic process screen 14 specified here is a basic process screen of which the setting is not confirmed. Then, the display screen control unit 711 causes the display section 762 to display the basic process screen 14.

There is no basic process screen of which the setting is not confirmed between the basic process screen 14 and the basic process screen 13. In this case, when the user operates the previous process button 752 in a state where the basic process screen 14 is displayed on the display section 762, the display screen control unit 711 causes the display section 762 to display the basic process screen 13. Further, when the user operates the previous process button 752 in a state where the basic process screen 13 is displayed on the display section 762, the display screen control unit 711 causes the display section 762 to display the basic process screen 12. Further, when the user operates the previous process button 752 in a state where the basic process screen 12 is displayed on the display section 762, the display screen control unit 711 causes the display section 762 to display the basic process screen 11. Even when the user operates the previous process button 752 in a state where the basic process screen 11 is displayed on the display section 762, the display screen control unit 711 causes the display section 762 to display the basic process screen 11. Alternatively, even when the user operates the previous process button 752 in a state where the basic process screen 14 is displayed on the display section 762, the display screen control unit 711 may cause the display section 762 to display the basic process screen 14.

According to the fourth operation example, the user can operate the previous process button 752 to display the next basic process screen after the basic process screen of which the setting is confirmed. Accordingly, it is possible to return to the basic process screen of which the setting is not confirmed, and thus, when the molding conditions are set in the recommended order, it is possible to easily identify how far the setting is completed. Thereby, the basic process screen 15 to be set next can be easily determined according to the recommended order.

The user may operate the previous process button 752 to display the basic process screen of the setting is confirmed. Accordingly, it is possible to return to the final basic process screen of which the setting is confirmed, and thus, when the molding conditions are set in the recommended order, it is possible to easily identify how far the setting is completed.

Hereinbefore, the embodiment of the injection molding machine 1 or the like is described. However, the present invention is not limited to the embodiment or the like, and various modifications and improvements are possible within the scope of the present invention described in claims.

When the screen transition buttons 751a to 751i are operated to switch the display screen after the previous process button 752 is operated to switch the display screen to the display screen displayed on the display section 762, the history generation unit 713 may record (additionally write) the history of the display screen displayed on the display section 762 in the storage unit 714 after deleting the history after the specified basic process screen.

### Brief Description of the Reference Symbols

10: first display screen group
11 to 15: basic process screen
20: second display screen group
21 to 24: remaining screen
700: controller
711: display screen control unit
712: display screen determination unit
713: history generation unit
714: storage unit
714a: history (history information)
714b: determination table
714c: recommended setting order information
750: operation unit
751a to 751i: screen transition button
752: previous process button
753: setting confirmation button
760: display unit
761: display area
762: display section

## Claims

1. An injection molding machine (1) comprising:
an operation unit (750) which is configured to receive an operation;
a display section (762) which is configured to display a display screen belonging to either a first display screen group (10) or a second display screen group (20);
a display screen control unit (711) which is configured to switch the display screen of the display section (762) based on the operation of the operation unit (750);
a storage unit (724) which is configured to store history information of the display screen displayed on the display section (762), and
a display screen determination unit (712) which is configured to determine whether the display screen, of which the history information is stored in the storage unit (724), is a display screen belonging to a first display screen group (10) or a display screen belonging to a second display screen group (20),
wherein when the operation unit (750) is operated, the display screen control unit (711) is configured to display the display screen belonging to the first display screen group (10) based on the history information stored in the storage unit (724) and on a determination result of the display screen determination unit (712) .

2. The injection molding machine (1) according to claim 1,
wherein the display screen belonging to the first display screen group (10) is a display screen related to setting of molding conditions of the injection molding machine (1), and
the display screen belonging to the second display screen group (20) is a display screen other than the display screen belonging to the first display screen group.

3. The injection molding machine (1) according to claim 1 or 2,
wherein in a case where the display screen belonging to the second display screen group (20) is displayed on the display section (762), when the operation unit (750) is operated, the display screen control unit (711) is configured to display a last displayed display screen belonging to the first display screen group (10) based on the history information.

4. The injection molding machine (1) according to any one of claims 1 to 3,
wherein in a case where the display screen belonging to the first display screen group (10) is displayed on the display section (762), when the operation unit (750) is operated, the display screen control unit (711) is configured to display, based on the history information, an immediately preceding displayed display screen belonging to the first display screen group (10) of the displayed display screen belonging to the first display screen group (10).

5. The injection molding machine (1) according to claim 1 or 2,
wherein when the operation unit (750) is operated, the display screen control unit (711) is configured to display the display screen belonging to the first display screen group (10), based on the history information and order information indicating an order of the display screen belonging to the first display screen group (10).

6. The injection molding machine (1) according to claim 5,
wherein the display screen control unit (711) is configured to display a display screen of which the order indicated by the order information is behind among the display screens belonging to the first display screen group (10) included in the history information.

7. The injection molding machine (1) according to any one of claims 1 to 4,
wherein the history information includes a transition history of the display screen displayed on the display section (762) and confirmation information indicating confirmation of the setting of the display screen, and
when the operation unit (750) is operated, the display screen control unit (711) is configured to display a next display screen belonging to the first display screen group (10) of the display screen belonging to the first display screen group (10) of which the setting is confirmed, among the display screens belonging to the first display screen group (10) included in the transition history of the display screen displayed on the display section (762).

## Patentansprüche

1. Spritzgießmaschine (1), umfassend:
eine Bedienungseinheit (750), welche konfiguriert ist, eine Bedienung zu empfangen;
einen Anzeigeabschnitt (762), welcher konfiguriert ist, einen Anzeigebildschirm anzuzeigen, der entweder zu einer ersten Anzeigebildschirmgruppe (10) oder zu einer zweiten Anzeigebildschirmgruppe (20) gehört;
eine Anzeigebildschirmsteuereinheit (711), welche konfiguriert ist, um den Anzeigebildschirm des Anzeigeabschnitts (762) basierend auf der Bedienung der Bedienungseinheit (750) umzuschalten;
eine Speichereinheit (724), welche konfiguriert ist, Verlaufsinformationen des Anzeigebildschirms, der auf dem Anzeigeabschnitt (762) angezeigt wird, zu speichern, und
eine Anzeigebildschirmbestimmungseinheit (712), welche konfiguriert ist zu bestimmen, ob der Anzeigebildschirm, in Bezug auf welchen die Verlaufsinformationen in der Speichereinheit (724) gespeichert werden, ein Anzeigebildschirm, der zu einer ersten Anzeigebildschirmgruppe (10) gehört, oder ein Anzeigebildschirm, der zu einer zweiten Anzeigebildschirmgruppe (20) gehört, ist,
wobei, wenn die Bedienungseinheit (750) bedient wird, die Anzeigebildschirmsteuereinheit (711) konfiguriert ist, den Anzeigebildschirm, der zu der ersten Anzeigebildschirmgruppe (10) gehört, basierend auf den Verlaufsinformationen, die in der Speichereinheit (724) gespeichert sind, und auf einem Bestimmungsergebnis der Anzeigebildschirmbestimmungseinheit (712) anzuzeigen.

2. Spritzgießmaschine (1) nach Anspruch 1,
wobei der Anzeigebildschirm, der zu der ersten Anzeigebildschirmgruppe (10) gehört, ein Anzeigebildschirm in Bezug auf Einstellung von Formbedingungen der Spritzgießmaschine (1) ist, und
der Anzeigebildschirm, der zu der zweiten Bildschirmanzeigegruppe (20) gehört, ein anderer Anzeigebildschirm als der Anzeigebildschirm, der zu der ersten Anzeigebildschirmgruppe gehört, ist.

3. Spritzgießmaschine (1) nach Anspruch 1 oder 2,
wobei in einem Fall, bei dem der Anzeigebildschirm, der zu der zweiten Anzeigebildschirmgruppe (20) gehört, auf dem Anzeigeabschnitt (762) angezeigt wird, wenn die Bedienungseinheit (750) bedient wird, die Anzeigebildschirmsteuereinheit (711) konfiguriert ist, einen letzten angezeigten Anzeigebildschirm, der zu der ersten Anzeigebildschirmgruppe (10) gehört, basierend auf den Verlaufsinformationen anzuzeigen.

4. Spritzgießmaschine (1) nach einem der Ansprüche 1 bis 3,
wobei in einem Fall, bei dem der Anzeigebildschirm, der zu der ersten Anzeigebildschirmgruppe (10) gehört, auf dem Anzeigeabschnitt (762) angezeigt wird, wenn die Bedienungseinheit (750) bedient wird, die Anzeigebildschirmsteuereinheit (711) konfiguriert ist, basierend auf den Verlaufsinformationen einen unmittelbar vorhergehenden angezeigten Anzeigebildschirm, der zu der ersten Anzeigebildschirmgruppe (10) gehört, des angezeigten Anzeigebildschirms, der zu der ersten Anzeigebildschirmgruppe (10) gehört, anzuzeigen.

5. Spritzgießmaschine (1) nach Anspruch 1 oder 2,
wobei, wenn die Bedienungseinheit (750) bedient wird, die Anzeigebildschirmsteuereinheit (711) konfiguriert ist, den Anzeigebildschirm, der zu der ersten Anzeigebildschirmgruppe (10) gehört, basierend auf den Verlaufsinformationen und Reihenfolgeinformationen, die eine Reihenfolge des Anzeigebildschirms, der zu der ersten Anzeigebildschirmgruppe (10) gehört, angeben, anzuzeigen.

6. Spritzgießmaschine (1) nach Anspruch 5,
wobei die Anzeigebildschirmsteuereinheit (711) konfiguriert ist, einen Anzeigebildschirm, in Bezug auf welchen die Reihenfolge, die durch die Reihenfolgeinformationen angegeben wird, sich hinter den Anzeigebildschirmen befindet, die zu der ersten Anzeigebildschirmgruppe (10) gehören, die in den Verlaufsinformationen enthalten sind, anzuzeigen.

7. Spritzgießmaschine (1) nach einem der Ansprüche 1 bis 4,
wobei die Verlaufsinformationen einen Übergangsverlauf des Anzeigebildschirms, der auf dem Anzeigeabschnitt (762) angezeigt wird, und Bestätigungsinformationen, die Bestätigung der Einstellung des Anzeigebildschirms angeben, umfassen, und
wenn die Bedienungseinheit (750) bedient wird, die Anzeigebildschirmsteuereinheit (711) konfiguriert ist, einen nächsten Anzeigebildschirm, der zu der ersten Anzeigebildschirmgruppe (10) gehört, des Anzeigebildschirms, der zu der ersten Anzeigebildschirmgruppe (10) gehört, in Bezug auf welchen die Einstellung bestätigt wird, unter den Anzeigebildschirmen, die zu der ersten Anzeigebildschirmgruppe (10) gehören, die in dem Übergangsverlauf des Anzeigebildschirms, der auf dem Anzeigeabschnitt (762) angezeigt wird, enthalten sind, anzuzeigen.

## Revendications

1. Un machine de moulage par injection (1) comprenant :
une unité d'opération (750) qui est configurée pour recevoir une opération ;
une section d'affichage (762) qui est configurée pour afficher un écran d'affichage appartenant soit à un premier groupe d'écrans d'affichage (10) soit à un second groupe d'écrans d'affichage (20) ;
une unité de commande d'écran d'affichage (711) qui est configurée pour commuter l'écran d'affichage de la section d'affichage (762) sur la base de l'opération de l'unité d'opération (750) ;
une unité de stockage (724) qui est configurée pour stocker des informations d'historique de l'écran d'affichage affiché sur la section d'affichage (762) ; et
une unité de détermination d'écran d'affichage (712) qui est configurée pour déterminer si l'écran d'affichage, dont les informations d'historique sont stockées dans l'unité de stockage (724), est un écran d'affichage appartenant à un premier groupe d'écrans d'affichage (10) ou un écran d'affichage appartenant à un second groupe d'écrans d'affichage (20) ;
dans lequel, lorsque l'unité d'opération (750) est actionnée, l'unité de commande d'écran d'affichage (711) est configurée de manière à afficher l'écran d'affichage appartenant au premier groupe d'écrans d'affichage (10) sur la base des informations d'historique stockées dans l'unité de stockage (724) et d'un résultat de détermination de l'unité de détermination d'écran d'affichage (712).

2. La machine de moulage par injection (1) selon la revendication 1,
dans laquelle l'écran d'affichage appartenant au premier groupe d'écrans d'affichage (10) est un écran d'affichage connexe au paramétrage de conditions de moulage de la machine de moulage par injection (1) ; et
l'écran d'affichage appartenant au second groupe d'écrans d'affichage (20) est un écran d'affichage distinct de l'écran d'affichage appartenant au premier groupe d'écrans d'affichage.

3. La machine de moulage par injection (1) selon la revendication 1 ou 2,
dans laquelle, dans un cas où l'écran d'affichage appartenant au second groupe d'écrans d'affichage (20) est affiché sur la section d'affichage (762), lorsque l'unité d'opération (750) est actionnée, l'unité de commande d'écran d'affichage (711) est configurée de manière à afficher un dernier écran d'affichage affiché appartenant au premier groupe d'écrans d'affichage (10) sur la base des informations d'historique.

4. La machine de moulage par injection (1) selon l'une quelconque des revendications 1 à 3,
dans laquelle, dans un cas où l'écran d'affichage appartenant au premier groupe d'écrans d'affichage (10) est affiché sur la section d'affichage (762), lorsque l'unité d'opération (750) est actionnée, l'unité de commande d'écran d'affichage (711) est configurée pour afficher, sur la base des informations d'historique, un écran d'affichage affiché immédiatement précédent appartenant au premier groupe d'écrans d'affichage (10) de l'écran d'affichage affiché appartenant au premier groupe d'écrans d'affichage (10).

5. La machine de moulage par injection (1) selon la revendication 1 ou 2,
dans laquelle, lorsque l'unité d'opération (750) est actionnée, l'unité de commande d'écran d'affichage (711) est configurée pour afficher l'écran d'affichage appartenant au premier groupe d'écrans d'affichage (10), sur la base des informations d'historique et d'informations d'ordre indiquant un ordre de l'écran d'affichage appartenant au premier groupe d'écrans d'affichage (10).

6. La machine de moulage par injection (1) selon la revendication 5,
dans laquelle l'unité de commande d'écran d'affichage (711) est configurée pour afficher un écran d'affichage dont l'ordre indiqué par les informations d'ordre se situe derrière parmi les écrans d'affichage appartenant au premier groupe d'écrans d'affichage (10) inclus dans les informations d'historique.

7. La machine de moulage par injection (1) selon l'une quelconque des revendications 1 à 4,
dans laquelle les informations d'historique incluent un historique de transition de l'écran d'affichage affiché sur la section d'affichage (762) et des informations de confirmation indiquant une confirmation du paramétrage de l'écran d'affichage ; et
lorsque l'unité d'opération (750) est actionnée, l'unité de commande d'écran d'affichage (711) est configurée pour afficher un écran d'affichage suivant appartenant au premier groupe d'écrans d'affichage (10) de l'écran d'affichage appartenant au premier groupe d'écrans d'affichage (10) dont le paramétrage est confirmé, parmi les écrans d'affichage appartenant au premier groupe d'écrans d'affichage (10) inclus dans l'historique de transition de l'écran d'affichage affiché sur la section d'affichage (762).
